# EUROPEAN PATENT APPLICATION

(11) **EP 4 606 645 A1**
(43) Date of publication of application: **27.08.2025**
(21) Application number: 24305301.4
(22) Date of filing: 23.02.2024
(51) Int. Cl.: B60Q 1/32, B60Q 1/50

(54) **METHOD AND APPARATUS FOR INFORMING A VULNERABLE ROAD USER OF A VEHICLE'S STATE**

(71) Applicant: TOYOTA JIDOSHA KABUSHIKI KAISHA, Toyota-shi, Aichi-ken, 471-8571 (JP)
(72) Inventor: THABET, Ziyed, 1140 BRUSSELS (BE); MAUDOUX, Jerome, 1140 BRUSSELS (BE); GUNS, Koen, 1140 BRUSSELS (BE)
(74) Representative: Cabinet Beau de Loménie

(57) **Abstract**

A computer-implemented method (20) for informing at least one vulnerable road user of a state of at least one part of a vehicle, the method comprising the following steps:
- obtaining (21) data reflecting at least one of an actual and an upcoming states of the at least one part of the vehicle (1); and
- lighting (22) with exterior lights (13) of the vehicle (1) a specific light pattern selected based on said data such that the at least one vulnerable road user visualizes the specific light pattern.

## Description

### BACKGROUND OF THE INVENTION

### 1. Field of the invention

The present disclosure relates to the field of vehicle control systems and, more particularly, to a computer-implemented method for informing a vulnerable road user of a state of at least one part of a vehicle.

### 2. Description of Related Art

The automation of vehicles presents a major challenge for automotive safety and driving optimization. In an effort to eliminate human error while driving a vehicle, Advanced Driver Assistance Systems (ADAS), also known as "driver assistance systems" have been designed to guide the driver and assist him in risk anticipation by automating, improving, or adapting some or all of the tasks related to driving a vehicle.

These driver assistance systems generally rely on sensors to assist the driver throughout their journey and often communicate with a server to receive real-time information along the vehicle's route. Modem driver assistance systems also provide additional information related to the route, such as weather conditions, traffic congestion, duration, and disruptions on the road (such as diversions or lane closures).

Such sensors also generally monitor the vehicle's surroundings and prevent road accidents. Through radar, LIDAR, and camera technologies, the driver assistance system detects potential hazards such as vehicles on the same road and provides timely warnings to the drivers of other vehicles, alerting them to imminent dangers like sudden braking or lane departure. One approach utilized by ADAS involves the generation of alerts in the form of audible signals and visual cues projected onto the road surface when there is a risk of collision with another vehicle.

However, the current driver assistance system may not be as advantageous as initially thought due to persistently high road fatalities among vulnerable road users, such as pedestrians and cyclists, primarily resulting from collisions with vehicles. Despite their capabilities, the driver assistance system encounters limitations, particularly in scenarios where pedestrians misjudge a vehicle's path. These situations often arise when pedestrians attempt to cross roads or intersections as they are not able to understand the movements performed or to be performed by the vehicle.

For this purpose, the visual cues of the driver assistance system are specifically designed to include symbols, lights or visual alerts displayed on the road. For instance, the driver assistance system may utilize illuminated symbols to display visual warnings to alert the pedestrian of nearby vehicle. However, these collisions stem from the fact that vulnerable road user struggle to clearly perceive the lights projected onto the road by the vehicle. As a result, vulnerable road users misinterpret the signals emitted by the driver assistance system and inadvertently enter the path of oncoming vehicles.

Thus, despite the intentions of the driver assistance systems to enhance safety through visual cues, the effectiveness of these warnings is undermined as they are not easily discernible to vulnerable users. Addressing this visibility issue is thus crucial to improve the overall efficacy of warning systems in mitigating accidents involving vulnerable users such as pedestrians and cyclists.

### SUMMARY

The object of the present invention is to at least substantially remedy the above-mentioned drawbacks. In this respect, the present invention relates to a computer-implemented method for informing at least one vulnerable road user of a state of at least one part of a vehicle, the method comprising the following steps:
- obtaining data reflecting at least one of an actual and an upcoming states of the at least one part of the vehicle; and
- lighting with the exterior lights of the vehicle a specific light pattern selected based on said data such that the at least one vulnerable road user visualizes the specific light pattern.

For conciseness, the method is referred to hereinafter as the informing method. Further, as used herein, for conciseness and unless the context indicates otherwise, "a", "an", and "the" are intended to refer to "at least one" or "each" and to include plural forms as well. Conversely, generic plural forms include the singular. Further, the "at least one part of a vehicle" comprises one part or a plurality of parts of the vehicle. The term "part of a vehicle" refers to any component or element that contributes to the functioning, structure, or operation of the vehicle such as one of the doors of the vehicle. Hereinafter, this term can be replaced by "a vehicle" and vice-versa.

Similarly, the term "at least one vulnerable road user" refers to one vulnerable road user or refers to a plurality of vulnerable road users, noting that the term "vulnerable road user" comprises a pedestrian or a cyclist. In other words, the vulnerable road users are individuals who are more susceptible to accidents and injuries due to their limited protection compared to the protective measures afforded by motorized vehicles.

As explained above, vulnerable road users are more susceptible to accidents involving vehicles due to several factors, even when lights are projected onto the road. Firstly, pedestrians and cyclists are inherently less visible than motorized vehicles, especially in low-light conditions or adverse weather. This reduced visibility increases the likelihood of drivers not noticing them in time to react appropriately. Additionally, vulnerable road users often share road space with vehicles, leading to potential conflicts at intersections, crossings and other points of interactions.

Despite lights being projected onto the road by the vehicle by advanced driver assistance systems or other safety technologies, there are scenarios where vulnerable road users may still be at risk. In fact, vulnerable road users may not accurately interpret the projected lights reducing their ability to react promptly to warnings. Similarly, cyclists may encounter challenges in discerning the projected lights and thus misjudge the intentions of approaching vehicles.

Accordingly, the aim of the invention is to address these challenges by enabling vulnerable road users to recognize at least one of the actual or upcoming states of at least a part (or a portion) of the vehicle through a light pattern with exterior lights intended to be readable by them. In particular, the invention involves assigning specific light patterns to correspond with the upcoming state and/or the actual state. Each light pattern thus serves as a visual indicator of the part of the vehicle's upcoming and/or actual state.

Thus, by associating distinct light patterns with different part of vehicle's states, vulnerable road users can quickly interpret and understand the vehicle's upcoming and/or actual state, enhancing their situational awareness and allowing them to react accordingly.

For this purpose, exterior lights, which are light sources positioned outside the vehicle, are used. Such exterior lights of the vehicle are specifically designed to be visible to other vulnerable road users, including pedestrians and cyclists. In particular, their exterior placement makes them more conspicuous and perceivable for vulnerable road users as they are directly exposed to their field of vision. This enables vulnerable road users to more easily detect the light signals emitted by the vehicle, even in low-light conditions or reduced visibility.

Optionally, the upcoming state comprises a driver's intention regarding the at least one part of the vehicle, and wherein the actual state comprises a mechanical condition or an operational status of the at least one part of the vehicle.

The driver's intention refers to the planned action or maneuver that the driver intends to perform while operating a vehicle, such as turning, changing lanes, stopping, or accelerating, while the mechanical condition refers to the vehicle's components and systems such as brakes and steering. For example, the mechanical condition may correspond to brakes engaged.

The operational status refers to the state of the vehicle indicating whether it is in motion or stationary. For instance, in a situation where the vehicle is parked and the driver intends to open the door which is considered as a part of the vehicle, the driver's intention is to open the door while the operation status indicates that the vehicle is stationary. In this case, obtained data includes factors such as the end of an automated parking operation or the position of the transmission lever in park mode in the case of manual parking. These events serve as triggers for activating specific light pattern indicating to surrounding individuals that the vehicle is stationary and the door is about to be opened.

Optionally, the exterior lights are front, side and rear lamps.

It should be noted that a skilled person is able to determine which exterior lights should be activated to executed the light pattern selected based on said data such that the vulnerable road user visualizes this light pattern. By evaluating these variables, the skilled person can choose to activate specific exterior lights to effectively communicate the vehicle's state to surrounding vulnerable road users, thereby enhancing safety and minimizing the risk of accidents.

Optionally, the specific light pattern comprises a modification of the light intensity and/or a light sequence performed by the exterior lights.

Optionally, the light sequence comprises a succession of illumination and extinction of light and/or a combination of lighting functions.

The present invention further relates to a computer program set including instructions for executing the steps of the above-described computer-implemented method when said program set is executed by at least one computer.

This program set can use any programming language and take the form of source code, object code, or a code intermediate between source code and object code, such as a partially compiled form or any other desirable form.

The present invention further relates to an apparatus for informing at least one vulnerable road user of a state of at least one part of a vehicle, the apparatus comprising:
- an obtaining module configured to obtain data reflecting at least one of an actual and an upcoming states of the at least one part of the vehicle; and
- a lighting module configured to activate exterior lights of the vehicle with a specific light pattern selected based on said data such that the at least one vulnerable road user visualizes the specific light pattern.

The apparatus referred to hereinafter as the informing apparatus, may be configured to carry out the above-mentioned computer-implemented method and may have part or all of the above-described features. The informing apparatus may have the hardware structure of a computer.

The present invention also relates to a vehicle comprising an apparatus for warning at least one vulnerable road user as described above.

The term "vehicle" may be directed to an apparatus capable of transporting people from one location to another, such as a car or a motorcycle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a block diagram of an apparatus for informing at least one vulnerable road user according to an embodiment of the present invention; and
- Fig. 2 is a flowchart of a computer-implemented method for informing the vulnerable road user according to an embodiment of the present invention.

### DETAILED DESCRIPTION OF EMBODIMENTS

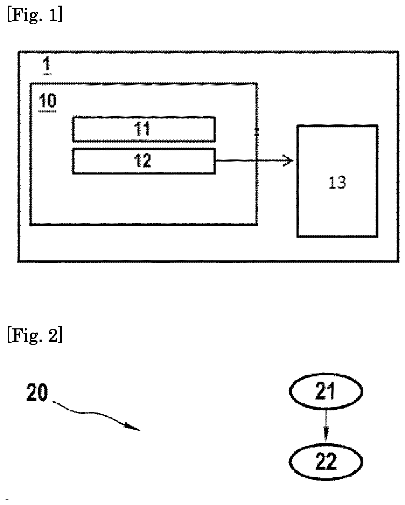

Figure 1 shows a block diagram of an informing apparatus 10 comprising an obtaining module 11 and a lighting module 12 according to embodiments of the present invention. The informing apparatus 10 may be located inside or outside a vehicle 1 which may be, without limitation, an autonomous or semi-autonomous vehicle. Such vehicle 1 may be directed to an apparatus capable of transporting people from one location to another, such as a car, and may be categorized into different levels based on the extent of automation and human involvement in the driving tasks.

Alternatively or additionally, one module or a plurality of modules among the modules of the informing apparatus 10 may be hosted or operated within a cloud (extern server) rather than residing on a local server.

The informing apparatus 10 may be configured for informing at least one vulnerable road user of a state of at least one part of a vehicle. Indeed, vulnerable road users face challenges in various scenarios involving vehicles, including approaching destinations, vehicle arrival and departure, parking, and door opening.

For instance, when the vehicle 1 is preparing to park, vulnerable road users may face dangers from the driver who may be focused on finding a parking spot rather than observing their surroundings. This can lead to accidents involving pedestrians or cyclists who may be in the vicinity of the parking space.

Once the vehicle 1 is parked, there is then a risk to vulnerable road users when occupants open the vehicle doors without checking for oncoming traffic. This can result in collisions, particularly with cyclists who may be riding close to parked vehicles or pedestrians passing by.

Finally, when the vehicle 1 is ready to leave a parking spot, vulnerable road users may be at risk if the driver fails to check for pedestrians or cyclists before pulling out. This can lead to accidents, especially in crowded parking lots or areas with limited visibility.

Thus, by informing vulnerable road users of the state of the at least one part of the vehicle 1 in these illustrative and unlimited scenarios, their safety is increased as they become more vigilant of their surroundings when they receive such information.

For this purpose, the informing apparatus 10 may comprise an electronic circuit, a processor (shared, dedicated, or grouped), a combinational logic circuit, a memory that executes one or more software programs, and/or other suitable components that provide the described functionality. In other words, the informing apparatus 10 may be connected to a memory, which may store data, e.g. at least one computer program, which, when executed, carries out the informing method according to the present invention.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk.

Alternatively, the memory can be an integrated circuit in which the program is incorporated, the circuit being adapted to execute the informing method or to be used in its execution.

The obtaining module 11 is a module configured to obtain data reflecting at least one of an actual state of the at least one part of the vehicle 1 and an upcoming state of the at least one part of the vehicle 1.

Such data can be obtained in various forms, including binary data and/or analog signals and/or digital signals and/or discrete data. Accordingly, the obtaining module 11 may be implemented as software running on the informing apparatus 10 or may be implemented partially or fully as a hardware element of the informing apparatus 10.

These data can reflect(s) either the current state of a part of the vehicle 1 or its upcoming state. For example, in the scenario of the vehicle 1 approaching its destination, data representing (or reflecting) the current state may include the vehicle's speed and its direction. On the other hand, data indicating the upcoming state may include the vehicle's intended path and/or predicted stopping distance and/or anticipated interactions with other road users.

In the context of the vehicle 1 preparing to park, current state data may include the vehicle's speed and trajectory. Upcoming state data could include the driver's intended parking spot, planned route adjustments, and/or predicted parking maneuvers. As for the scenario of the parked vehicle 1 with the door about to be opened, current state data may include information indicating whether the vehicle is stationary. Future state data could involve the driver's intention to open the door.

Either of the current and the future state, or both combined, enable(s) the selection of a specific light pattern that is visible to vulnerable road users who can be effectively warned of a risk of an accident.

For this end, the lighting module 12 is a module configured to activate exterior lights 13 of the vehicle 1 with a specific light pattern selected based on said data such that the at least one vulnerable road user visualizes the specific light pattern.

It should be noted that a skilled person is able to determine which exterior lights 13 should be activated to execute the light pattern selected based on the actual and/or upcoming movement such that the at least one vulnerable road user visualizes this light pattern.

For instance, the skilled person may choose the front and/or side and/or rear lamps to increase awareness for vulnerable road users based on their understanding of human perception and behaviour in a specific scenario. They may consider factors such as the visibility, intensity, colour and animation of the exterior lights 13 to ensure they effectively capture the attention of the vulnerable road users and to communicate the desired information. For example, the skilled person may select bright and/or contrasting colours that are easily distinguishable against different backgrounds and lighting conditions, making them more noticeable to pedestrians, cyclists and other vulnerable road users. They may also choose to utilize dynamic light patterns to draw immediate attention to potential hazards or changes in the vehicle's movement.

Other examples of exterior lights 13 can be chosen for the same reasons such as a turn signal lamp and/or a side turn signal lamp and/or a rear fog lamp and/or reverse lamp. A person skilled in the art is able to select from various lighting functions based on the scenario encountered by the vulnerable road user, ensuring clear readability and understanding of the signals conveyed by such lighting functions (lights). For instance, the person skilled in the art may opt to use non-exhaustively front and rear position lights, low and high beam lights, daytime running lights, or stop lights.

Such lighting module 12 may be implemented as software running on the informing apparatus 10 or may be implemented partially or fully as a hardware element of the informing apparatus 10. In particular, the informing apparatus 10 may comprise a program that includes both the obtaining module 11 and the lighting module 12. Alternatively, the obtaining module 11 may be realized as an independent program (in particular, beside a program forming the lighting module 12). In another variant, the lighting module 12 may be realized as an independent program (in particular, beside a program forming the obtaining module 11).

The tasks carried out by the informing apparatus 10 are detailed hereinafter with respect to the corresponding informing method, an embodiment of which is illustrated in Fig. 2.

Figure 2 is a flowchart of the informing method 20 according to an embodiment of the present invention. The informing method 20 is performed for informing at least one vulnerable road user of the state of at least one part of the vehicle 1. To this end, the informing method 20 comprises a step 21 performed by the obtaining module 11 to obtain data reflecting at least one of the actual and the upcoming states of the at least one part of the vehicle.

The upcoming state comprises the driver's intention regarding the at least one part of the vehicle while the actual state comprises a mechanical condition or an operational status of the at least one part of the vehicle.

The driver's intention refers to the planned action or maneuver that the driver intends to perform while operating a vehicle, such as turning, changing lanes, stopping, or accelerating, while the mechanical condition refers to the vehicle's components and systems such as brakes and steering. For example, the mechanical condition may correspond to brakes engaged.

The operational status refers to the state of the vehicle indicating whether it is in motion or stationary. For instance, in a situation where the vehicle is parked and the driver intends to open the door which is considered as a part of the vehicle, the driver's intention is to open the door while the operation status indicates that the vehicle is stationary. In this case, obtained data includes factors such as the end of an automated parking operation or the position of the transmission lever in park mode in the case of manual parking. These events serve as triggers for activating specific light pattern indicating to surrounding individuals that the vehicle is stationary and the door is about to be opened.

That is, the informing method 20 further comprises a step 22 performed by the lighting module 12 to lighting with the exterior lights 13 of the vehicle 1 a specific light pattern selected based on said data such that the at least one vulnerable road user visualizes the specific light pattern. For instance, a specific light pattern may be in form of rapidly flashing lights or alternating yellow lights.

As each light pattern serves as a visual indicator of the part of the vehicle's upcoming and/or actual state, the vulnerable road user can quickly interpret and understand the vehicle's upcoming and/or actual state, enhancing their situational awareness and allowing them to react accordingly.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense. It should also be noted that using the informing apparatus 10 in ADAS system is only an example of application and thus cannot be limited to this purpose. The informing apparatus 10 can be implemented in various systems and for a variety of other applications in which a person skilled in the art finds it useful to implement the invention. For example, the invention can also be employed to inform other individuals besides vulnerable road users.

## Claims

1. A computer-implemented method (20) for informing at least one vulnerable road user of a state of at least one part of a vehicle (1), the method comprising the following steps:
- obtaining (21) data reflecting at least one of an actual and an upcoming states of the at least one part of the vehicle (1); and
- lighting (22) with exterior lights (13) of the vehicle (1) a specific light pattern selected based on said data such that the at least one vulnerable road user visualizes the specific light pattern.

2. A computer-implemented method according to claim 1, wherein the upcoming state comprises a driver's intention regarding the at least one part of the vehicle (1), and wherein the actual state comprises a mechanical condition or an operational status of the at least one part of the vehicle (1).

3. A computer-implemented method according to claim 1 or 2, wherein the exterior lights (13) are front, side and rear lamps.

4. A computer-implemented method according to any of claims 1 to 3, wherein the specific light pattern comprises a modification of the light intensity and/or a light sequence performed by the exterior lights (13).

5. A computer-implemented method according to claim 4, wherein the light sequence comprises a succession of illumination and extinction of light and/or a combination of lighting functions.

6. A computer program set including instructions for executing the steps of the method of any one of claims 1 to 5 when said program set is executed by at least one computer.

7. An apparatus (10) for informing at least one vulnerable road user of a state of at least one part of a vehicle (1), the apparatus comprising:
- an obtaining module (11) configured to obtain data reflecting at least one of an actual and an upcoming states of the at least one part of the vehicle (1); and
- a lighting module (12) configured to activate exterior lights (13) of the vehicle (1) with a specific light pattern selected based on said data such that the at least one vulnerable road user visualizes the specific light pattern.

8. A vehicle (1) comprising an apparatus (10) according to claim 7.
